# EUROPEAN PATENT SPECIFICATION

(11) **EP 1 561 015 B1**
(45) Date of publication and mention of the grant of the patent: **01.07.2009**
(21) Application number: 03754335.2
(22) Date of filing: 20.10.2003
(51) Int. Cl.: F01N 3/025

(54) **METHOD FOR CLEANING A PARTICLE FILTER AND A VEHICLE FOR UTILIZING SAID METHOD**
VERFAHREN ZUR REINIGUNG EINES TEILCHENFILTERS UND FAHRZEUG ZUR VERWENDUNG DES VERFAHRENS
PROCEDE DE NETTOYAGE D'UN FILTRE A PARTICULES ET VEHICULE EXPLOITANT CE PROCEDE

(30) Priority: 05.11.2002 SE 0203250
(43) Date of publication of application: 10.08.2005
(73) Proprietor: VOLVO LASTVAGNAR AB, 405 08 Göteborg (SE)
(72) Inventor: PERSSON, Per, S-433 41 Partille (SE); SVENSSON, Bo, S-422 43 Hisings Backa (SE); ALM, Christer, SE-414 58 Göteborg (SE)
(74) Representative: Fröhling, Werner Otto
(86) International application number: PCT/SE2003/001621
(87) International publication number: WO 2004/042206

(56) References cited:
- EP-A2- 1 176 298
- WO-A1-02/26379
- DE-A1- 3 834 850
- US-A- 5 826 425

## Description

### TECHNICAL FIELD

The present invention relates to a method for regenerating a particle filter arranged in thermal proximity to a catalyst unit in an exhaust duct connected to an internal combustion engine, according to the preamble of patent claim 1, and a vehicle according to the preamble of patent claim 6.

### BACKGROUND

In the combustion process in diesel engines, soot particles are also formed in addition to water vapor, nitrogen oxides and carbon dioxide. Small quantities of uncombusted hydrocarbons and carbon monoxide also occur. A diesel engine which is provided with a particle filter has greatly reduced emissions of particles. However, the particle filter has to be regenerated more or less continuously so as not to become full and cause high pressure drops across the exhaust system. In order for the particle filter to self-regenerate automatically, an exhaust gas temperature of at least 250°C and sulfur-poor fuel < 30 ppm are necessary. When the diesel engine works at low load levels and/or low ambient temperatures, however, the exhaust gas temperature is usually lower than 250°C, which leads to soot accumulating in the particle filter. If such operating states are allowed to continue for a relatively long time, the soot buildup in the particle filter can reach a detrimental level. The expression detrimental level means that if the operating state is subsequently changed and regeneration of the filter begins, there is an imminent risk of overheating with permanent damage to the filter as a consequence. Moreover, there is a risk that the magnitude of the exhaust back-pressure can threaten the functioning of the engine.

EP 341 832, for example, describes a system comprising a filter in which soot particles are caught. The soot particles are then combusted in a nitrogen dioxide environment. The nitrogen dioxide is formed from within the exhaust gases from nitrogen monoxide in an oxidation catalyst arranged upstream of the filter. One problem with the system described in EP 341 832 is that the capacity for converting the soot particles into carbon dioxide is low in operating conditions with low exhaust gas temperatures. In this connection, the regeneration of the particle filter requires too much time or as the case may be is inadequate, the filter gradually becoming blocked with increased pressure drop as a consequence. This in turn results in the filter having to be serviced frequently.

### SUMMARY OF THE INVENTION

One object of the invention is therefore to provide a method which makes possible effective regeneration of particle filters and is moreover easy to apply to internal combustion engines. This object is achieved by a method according to the characterizing part of patent claim 1.

According to the method proposed, an injection unit assigned to the internal combustion engine supplies fuel to an exhaust system connected to the engine at times when the engine is driven with low engine load, an exhaust pressure regulator arranged in the exhaust system then being activated. A catalyst unit arranged in the exhaust duct in thermal proximity to the particle filter is exposed to the fuel supplied, which is oxidized. In this connection, the particle filter is heated to such a temperature that soot particles are converted into carbon dioxide in reaction with oxygen contained in said exhaust gases. The injection unit can consist of a separate unit which has an injector located in the exhaust duct, or of the existing injection system of the internal combustion engine.

The invention makes use of the fact that an exhaust pressure regulator can be used at low load in order to build up a back-pressure in the exhaust system which increases the temperature of the exhaust flow.

In a preferred embodiment, the fuel is supplied by means of injectors assigned to the combustion chambers of the engine. In this case, the fuel is supplied as indicated above, when the engine is driven at low load and the exhaust pressure regulator is activated, and at such a stage that fuel is allowed to pass through the combustion chamber into the exhaust duct in a non-combusted or only partly combusted state. This is achieved by supplying the fuel at a delayed crank angle position in relation to normal injection, that is to say during the expansion or exhaust stroke.

The invention also relates to a vehicle in which said method is used.

### DESCRIPTION OF FIGURES

The invention will be described in greater detail with reference to accompanying drawing figures, in which
- Fig. 1: shows diagrammatically a vehicle comprising an internal combustion engine equipped with a particle filter which is regenerated by a method according to the invention;
- Fig. 2: shows diagrammatically in greater detail a turbocharged diesel engine with a particle filter according to Fig. 1, and
- Fig. 3: shows in graph form the volumetric flow of injected fuel quantity during normal operation and at low engine load when regeneration takes place.

### DESCRIPTION OF ILLUSTRATIVE EMBODIMENTS

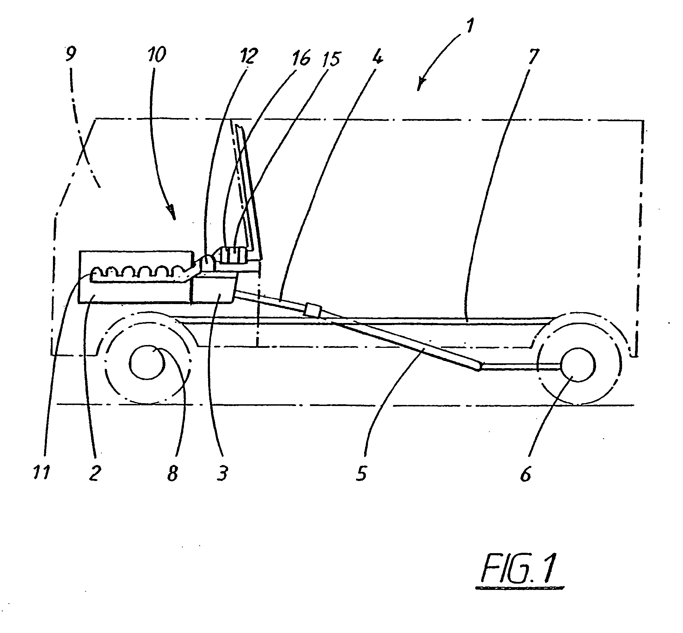

Figure 1 shows a vehicle 1 which is equipped with an internal combustion engine 2 and a gearbox 3 coupled to this engine. The gearbox has an output driving shaft 4 which, via a propeller shaft 5, drives at least one pair of driving wheels 6. In a conventional way, the vehicle 1 is constructed around a frame 7 which is supported by said driving wheels 6 and preferably a set of steerable wheels 8. The vehicle preferably comprises a cab 9.

In a conventional way, the internal combustion engine is equipped with an exhaust system 10 which comprises an exhaust pipe 11 connected to the outlet ports of the engine. A turbine 12 is preferably arranged in the exhaust system 10 and forms part of a turbo unit 13 and is thus mechanically coupled to a compressor 14 arranged on the intake side (not shown) of the engine. There may also be a turbine mechanically coupled back to the driving shaft of the internal combustion engine in a turbo compound system.

The engine is of the diesel type, which means that soot particles are formed during the combustion process. The exhaust system is therefore equipped with a particle filter 15. An oxidation catalyst 16 is arranged in thermal proximity to the particle filter. In thermal proximity means that the reaction which takes place in the oxidation catalyst is capable of heating the particle filter. For this purpose, the oxidation catalyst is usually mounted upstream of and in direct proximity to the particle filter, but it is also conceivable to integrate the particle filter and the oxidation catalyst on a common bearing structure where catalyst material is spread over the filtering body.

The oxidation catalyst and the particle filter can preferably be designed as described in EP 341 832 or EP 835 684. Soot particles are caught in the particle filter 13. Under favorable conditions, a continuous conversion of nitric oxide NO into nitrogen dioxide NO₂ takes place in the oxidation catalyst. Oxidation of the soot particles then takes place in a nitrogen dioxide environment, the soot particles being oxidized to form carbon dioxide in one, some or all of the processes NO₂ + C ⇒ NO + CO, NO₂ + C ⇒ ½N₂ + CO₂ or 2NO₂ + C ⇒ 2NO + CO₂.

On account of the relatively low content of NOx, in particular NO₂ however, these processes are too slow in order completely to regenerate the filter at low temperatures and/or low load on the engine. Disruption of the NO₂ formation, for example on account of sulfur poisoning, also leads to impaired soot combustion.

The soot particles can also react directly with the excess oxygen O₂ present in diesel exhaust gases, but a prerequisite for this is that the temperature exceeds approximately 600°C. This reaction is several powers of ten faster than the reaction in which NO₂ reacts with the soot because the concentration of oxygen O₂ remaining in diesel exhaust gases is approximately three powers of ten greater than the concentrations of NO₂ are. If this temperature is used for regeneration of the soot filter, the whole regeneration can be limited to a few minutes.

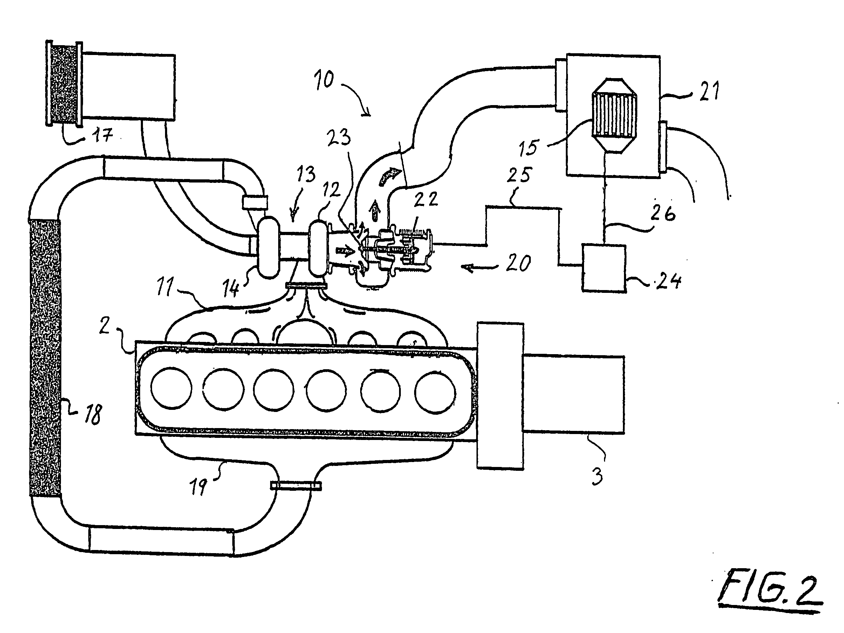

Fig. 2 shows in greater detail the internal combustion engine 2 which is arranged for regeneration of a particle filter according to the invention. The internal combustion engine preferably forms part of a driving unit for a truck or a bus. The engine is advantageously of the directly injected diesel engine type in which a turbo unit 13 with an exhaust-driven turbine 12 and a compressor 14 arranged on the turbine shaft is used for compression and supply of combustion air. Intake air is supplied to the supercharger from an air filter 17 for compression, after which the compressed air is cooled as it passes through an intercooler 18 before it is supplied to the intake manifold 19 of the engine.

The exhaust gases of the engine are collected in a conventional way in an exhaust manifold 11 and are then conducted to the turbine 12 of the supercharger 13 for driving the compressor 14. The exhaust gases are then conducted onward via an exhaust pressure regulator 20 to a muffler unit 21 with a particle filter 15.

The exhaust pressure regulator 20 can be of a kind known per se and comprises a piston valve with a pneumatically controlled piston 22 and a valve disk 23 mounted at the opposite end of a rod. A regulating air pressure acts against the piston 22 via a compressed-air line (not shown) which is connected to a compressed-air system contained in the vehicle, which is used for generating power for auxiliary units in the vehicle.

A control unit 24, suitably a microprocessor, is connected to the exhaust pressure regulator 20 via the compressed-air line 25 for controlling the regulating pressure depending on input data. Such input data is provided via, for example, a line 26 to the particle filter 15. The exhaust pressure regulator can be activated by, for example, detection of the particle quantity in the particle filter 15 having reached a certain level. Alternatively, activation can take place on detection of the pressure drop in the particle filter having reached a certain level. Another variant is to detect whether the engine has worked at low load for a certain time. By means of the control unit 24, the valve disk can therefore be set between fully open position and active position, where a given exhaust pressure is defined by the interaction of the valve with the gas flowing through.

The exhaust pressure regulator 20 can be activated to different degrees depending on how hot the exhaust gases are. In this connection, the exhaust gas temperature can be measured and the exhaust pressure regulator can be controlled until its desired temperature is obtained. Alternatively, the control unit of the engine can, with a known ambient temperature in combination with the current operating point, calculate the exhaust gas temperature and then control the exhaust pressure regulator until the desired exhaust gas temperature is obtained.

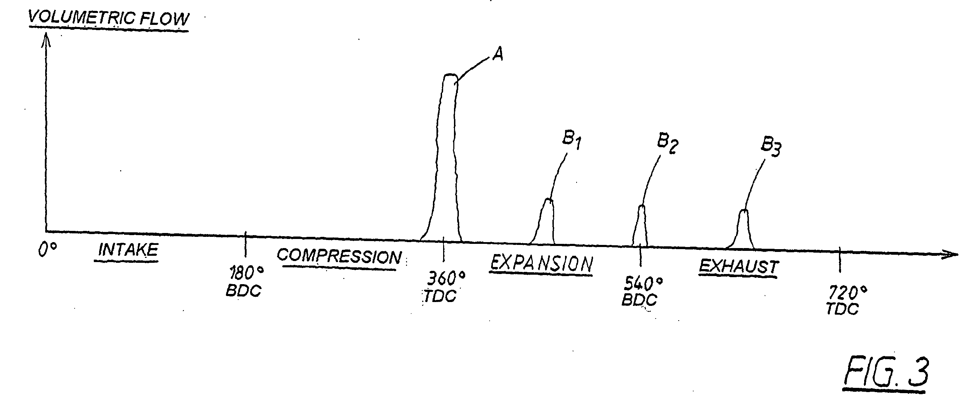

Fig. 3 shows diagrammatically the volumetric flow of injected fuel quantity during normal operation and at low engine load during regeneration. The regulation of injected fuel quantity and the angle position of the crankshaft when injection takes place are controlled by the control unit 24 in a manner well-known to the expert. An example of a control unit for vehicles is given in SAE J1939/71, 1996. The graph shows the volumetric flow as a function of the crankshaft angle position, which is indicated with the bottom and top dead centers of the piston as reference points. The four strokes of the internal combustion engine are indicated along the x axis, the intake stroke between 0° and 180°, the compression stroke between 180° and 360°, the expansion stroke between 360° and 540°, and the exhaust stroke between 540° and 720°.

Curve A shows the fuel quantity supplied for an operating case when the engine is working under normal load. Fuel is then supplied at the transition between the compression stroke and the expansion stroke with a duration of between 3 and 30 crank angle degrees.

The curves B₁ - B₃ show the fuel quantity supplied under low engine load for regeneration of a particle filter arranged downstream of an oxidation catalyst in the exhaust duct. The fuel is preferably supplied during the expansion stroke or the exhaust stroke within a range covering 30° to 90° after top dead center between the compression stroke and the expansion stroke. A wider range of 0° to 360° after top dead center between the compression stroke and the expansion stroke is possible, that is to say during the expansion stroke and the exhaust stroke.

In illustrative embodiments B₁ and B₂, fuel is supplied between 30° and 180° after top dead center between the compression stroke and the expansion stroke.

In illustrative embodiment B₃, fuel is supplied 270° after top dead center.

The invention is not to be regarded as being limited to the illustrative embodiments described above, but a number of further variants and modifications are conceivable within the scope of the patent claims below.

## Claims

1. A method for regenerating a particle filter (15) arranged in thermal proximity to a catalyst unit (16) in an exhaust duct (10) connected to an internal combustion engine (2), which particle filter is located downstream of an adjustable exhaust pressure regulator (20) for regulating an exhaust flow through the exhaust duct, **characterized by** the steps
of establishing by means of a control unit (24) that the internal combustion engine is being driven at low engine load,
of activating the exhaust pressure regulator (20) with a predetermined regulating pressure, and
of supplying fuel to the exhaust duct (10) by means of an injection unit, said catalyst unit (16) being exposed to said fuel, which is oxidized, and the particle filter (15) being heated to such a temperature that soot particles are converted into carbon dioxide in reaction with oxygen contained in said exhaust flow.

2. The regenerating method as claimed in claim 1, **characterized in that** said injection unit supplies fuel to a combustion chamber arranged in the internal combustion engine (2) at such a stage of the working cycle of the internal combustion engine that fuel is allowed to pass through the combustion chamber into the exhaust duct (10) in a non-combusted or partly combusted state, said non-combusted or partly combusted fuel being oxidized on contact with the catalyst unit (16), and the particle filter (15) being heated to such a temperature that soot particles are converted into carbon monoxide in reaction with oxygen contained in said exhaust flow.

3. The regenerating method as claimed in claim 2, **characterized in that** said fuel is supplied during the expansion stroke or the exhaust stroke of the internal combustion engine.

4. The regenerating method as claimed in claim 1, **characterized in that** fuel is supplied directly to the exhaust duct (10) via an injection unit assigned to the exhaust duct.

5. The regenerating method as claimed in any one of the preceding claims, **characterized in that** fuel is supplied in cases when the exhaust gas temperature at the particle filter (15) under low load and with the exhaust pressure regulator activated is at least 250°C.

6. A vehicle (1) comprising an internal combustion engine (2) and a particle filter (15) in thermal proximity to a catalyst unit (16) in an exhaust duct (10) connected to the internal combustion engine, which particle filter is located downstream of an adjustable exhaust pressure regulator (20) for regulating an exhaust flow through the exhaust duct, **characterized in that** an injection system assigned to said vehicle is arranged so as, when regeneration of the particle filter (15) is necessary, to supply fuel to the exhaust duct (10) with simultaneous activation of the exhaust pressure regulator (20), the catalyst unit (16) being exposed to said fuel, which is oxidized, and the particle filter being heated to such a temperature that soot particles are converted into carbon dioxide in reaction with oxygen contained in said exhaust flow.

7. The vehicle as claimed in claim 6, **characterized in that** the injection system is arranged so as to supply fuel to combustion chambers arranged in the internal combustion engine (2) at such a stage of the working cycle of the internal combustion engine that fuel is allowed to pass through the combustion chamber into the exhaust duct (10) in a non-combusted or partly combusted state.

8. The vehicle as claimed in claim 7, **characterized in that** said injection system is arranged so as to supply fuel during the expansion stroke or the exhaust stroke of the internal combustion engine.

9. The vehicle as claimed in claim 6, **characterized in that** the vehicle comprises an injection unit assigned to the exhaust duct (10), which injection unit is arranged so as to supply fuel directly to the exhaust duct.

10. The vehicle as claimed in any one of claims 6-9, **characterized in that** the exhaust pressure regulator (20) comprises a pneumatically operated piston (22) which is connected to a valve disk (23) which, when moved in the direction of a seat, forms a throttle for the exhaust flow of the engine.

## Patentansprüche

1. Verfahren zur Regenerierung eines Partikelfilters (15), der in thermischer Nähe zu einer Katalysatoreinheit (16) in einem mit einem Verbrennungsmotor (2) verbundenen Abgaskanal (10) angeordnet ist, wobei sich der Partikelfilter stromabwärts von einer einstellbaren Abgasdruckregeleinrichtung (20) zur Regelung einer Abgasströmung durch den Abgaskanal befindet, **gekennzeichnet durch** die Schritte
- Feststellen mittels einer Steuereinheit (24), dass der Verbrennungsmotor mit einer niedrigen Motorlast angetrieben wird,
- Aktivieren der Abgasdruckregeleinrichtung (20) mit einem vorgegebenen Regeldruck und
- Zuführen von Kraftstoff zu dem Abgaskanal (10) mittels einer Einspritzeinheit, wobei die Katalysatoreinheit (16) dem Kraftstoff ausgesetzt wird, der oxidiert wird, und der Partikelfilter (15) auf eine solche Temperatur erwärmt wird, dass Russpartikel bei einer Reaktion mit in der Abgasströmung enthaltenem Sauerstoff in Kohlendioxid umgewandelt werden.

2. Regenerierungsverfahren nach Anspruch 1, **dadurch gekennzeichnet, dass** die Einspritzeinheit einer in dem Verbrennungsmotor (2) angeordneten Verbrennungskammer in einem solchen Stadium des Arbeitszyklus des Verbrennungsmotors Kraftstoff zuführt, dass der Kraftstoff in einem nicht-verbrannten oder teilweise verbrannten Zustand durch die Verbrennungskammer in den.Abgaskanal (10) hindurchgehen kann, wobei der nicht-verbrannte oder teilweise verbrannte Kraftstoff beim Kontakt mit der Katalysatoreinheit (16) oxidiert wird und der Partikelfilter (15) auf eine solche Temperatur erwärmt wird, dass Russpartikel bei einer Reaktion mit in der Abgasströmung enthaltenem Sauerstoff in Kohlendioxid umgewandelt werden.

3. Regenerierungsverfahren nach Anspruch 2, **dadurch gekennzeichnet, dass** der Kraftstoff während des Expansionshubs oder des Auslasshubs des Verbrennungsmotors zugeführt wird.

4. Regenerierungsverfahren nach Anspruch 1, **dadurch gekennzeichnet, dass** dem Abgaskanal (10) über eine dem Abgaskanal zugeordnete Einspritzeinheit Kraftstoff direkt zugeführt wird.

5. Regenerierungsverfahren nach einem der vorhergehenden Ansprüche, **dadurch gekennzeichnet, dass** Kraftstoff in den Fällen zugeführt wird, wenn die Abgastemperatur am Partikelfilter (15) unter niedriger Last und bei aktivierter Abgasdruckregeleinrichtung wenigstens 250° C ist.

6. Fahrzeug (1) mit einem Verbrennungsmotor (2) und einem Partikelfilter (15) in thermischer Nähe zu einer Katalysatoreinheit (16) in einem mit dem Verbrennungsmotor verbundenen Abgaskanal (10), wobei sich der Partikelfilter stromabwärts von einer einstellbaren Abgasdruckregeleinrichtung (20) zum Regeln einer Abgasströmung durch den Abgaskanal befindet, **dadurch gekennzeichnet, dass** ein dem Fahrzeug zugeordnetes Einspritzsystem so angeordnet ist, dass es, wenn die Regeneration des Partikelfilters (15) notwendig ist, dem Abgaskanal (10) bei gleichzeitiger Aktivierung der Abgasdruckregeleinrichtung (20) Kraftstoff zuführt, wobei die Katalysatoreinheit (16) dem Kraftstoff ausgesetzt wird, der oxidiert wird, und der Partikelfilter auf eine solche Temperatur erwärmt wird, dass Russpartikel bei einer Reaktion mit in der Abgasströmung enthaltenem Sauerstoff in Kohlendioxid umgewandelt werden.

7. Fahrzeug nach Anspruch 6, **dadurch gekennzeichnet, dass** das Einspritzsystem so angeordnet ist, dass es in dem Verbrennungsmotor (2) angeordneten Verbrennungskammern in einem solchen Stadium des Arbeitszyklus des Verbrennungsmotors Kraftstoff zuführt, dass der Kraftstoff in einem nicht-verbrannten oder teilweise verbrannten Zustand durch die Verbrennungskammer in den Abgaskanal (10) hindurchgehen kann.

8. Fahrzeug nach Anspruch 7, **dadurch gekennzeichnet, dass** das Einspritzsystem so angeordnet ist, dass es während des Expansionshubs oder des Auslasshubs des Verbrennungsmotors Kraftstoff zuführt.

9. Fahrzeug nach Anspruch 6, **dadurch gekennzeichnet, dass** das Fahrzeug eine dem Abgaskanal (10) zugeordnete Einspritzeinheit umfasst, wobei die Einspritzeinheit so angeordnet ist, dass sie dem Abgaskanal direkt Kraftstoff zuführt.

10. Fahrzeug nach einem der Ansprüche 6 bis 9, **dadurch gekennzeichnet, dass** die Abgasdruckregeleinrichtung (20) einen pneumatisch betriebenen Kolben (22) umfasst, der mit einer Ventilscheibe (23) verbunden ist, die, wenn sie in Richtung eines Sitzes bewegt wird, eine Drossel für die Abgasströmung des Motors bildet.

## Revendications

1. Procédé pour régénérer un filtre à particules (15) agencé à proximité thermique d'une unité de catalyse (16) dans un conduit d'échappement (10) relié à un moteur à combustion interne (2), lequel filtre à particules est positionné en amont d'un régulateur de pression d'échappement ajustable (5) pour réguler un écoulement d'échappement à travers le conduit d'échappement, **caractérisé par** les étapes consistant à :
établir, par l'intermédiaire d'une unité de commande (24), que le moteur à combustion interne est entraîné à une faible charge de moteur,
activer le régulateur de pression d'échappement (20) avec une pression de régulation prédéterminée, et
alimenter du carburant vers le conduit échappement (10) par l'intermédiaire d'une unité d'injection, ladite unité de catalyse (7) étant exposée audit carburant, qui est oxydé, et le filtre à particules (15) étant chauffé à une température telle que des particules de suie sont converties en dioxyde de carbone en réaction avec de l'oxygène contenu dans ledit écoulement d'échappement.

2. Procédé de régénération selon la revendication 1, **caractérisé en ce que** ladite unité d'injection alimente du carburant vers une chambre de combustion agencée dans le moteur à combustion interne (2) à un tel stade du cycle de travail du moteur à combustion interne que du carburant est autorisé à passer à travers la chambre de combustion jusque dans le conduit d'échappement (10) dans un état non brûlé ou partiellement brûlé, ledit carburant non brûlé ou partiellement brûlé étant oxydé lors d'un contact avec l'unité de catalyse (16), et le filtre à particules (15) étant chauffé à une température telle que des particules de suie sont converties en monoxyde de carbone en réaction avec de l'oxygène contenu dans ledit écoulement d'échappement.

3. Procédé de régénération selon la revendication 2, **caractérisé en ce que** ledit carburant est alimenté pendant la course de détente ou la course d'échappement du moteur à combustion interne.

4. Procédé de régénération selon la revendication 1, **caractérisé en ce que** le carburant est alimenté directement vers le conduit d'échappement (10) via une unité d'injection attribuée au conduit d'échappement.

5. Procédé de régénération selon l'une quelconque des revendications précédentes, **caractérisé en ce que** du carburant est alimenté dans des cas dans lesquels la température des gaz d'échappement au niveau du filtre à particules (15) sous une faible charge et avec le régulateur de pression d'échappement activé est d'au moins 250°C.

6. Véhicule (1) comprenant un moteur à combustion interne (2) et un filtre à particules (15) à proximité thermique d'une unité de catalyse (16) dans un conduit d'échappement (10) relié au moteur à combustion interne, lequel filtre à particules est situé en aval d'un régulateur de pression d'échappement ajustable (20) pour réguler un écoulement d'échappement à travers le conduit d'échappement, **caractérisé en ce qu'**un système d'injection attribué audit véhicule est agencé de manière à, lorsqu'une régénération du filtre à particules (15) est nécessaire, alimenter du carburant vers le conduit d'échappement (10) avec l'activation simultanée du régulateur de pression d'échappement (20), l'unité de catalyse (16) étant exposée audit carburant, qui est oxydé, et le filtre à particules étant chauffé à une température telle que des particules de suie sont converties en dioxyde de carbone en réaction avec de l'oxygène contenu dans ledit écoulement d'échappement.

7. Véhicule selon la revendication 6, **caractérisé en ce que** le système d'injection est agencé de manière à alimenter du carburant vers les chambres de combustion agencées dans le moteur à combustion interne (2) à un stade tel du cycle de travail du moteur à combustion interne que du carburant est autorisé à passer à travers la chambre de combustion jusque dans le conduit d'échappement (10) dans un état non brûlé ou partiellement brûlé.

8. Véhicule selon la revendication 7, **caractérisé en ce que** ledit système d'injection est agencé de manière à alimenter du carburant pendant la course de détente ou la course d'échappement du moteur à combustion interne.

9. Véhicule selon la revendication 6, **caractérisé en ce que** le véhicule comprend une unité d'injection attribuée au conduit échappement (10), laquelle unité d'injection est agencée de manière à fournir du carburant directement vers le conduit d'échappement.

10. Véhicule selon l'une quelconque des revendications 6 à 9, **caractérisé en ce que** le régulateur de pression d'échappement (20) comporte un piston actionné pneumatiquement (22) qui est relié à un disque de soupape (23) qui, lorsqu'il est déplacé dans la direction d'un siège, forme un étranglement pour l'écoulement d'échappement du moteur.
